# EUROPEAN PATENT APPLICATION

(11) **EP 1 054 552 A1**
(43) Date of publication of application: **22.11.2000**
(21) Application number: 99108679.4
(22) Date of filing: 18.05.1999
(51) Int. Cl.: H04M 1/60

(54) **Improved hand-free telephone receiver**

(71) Applicant: Eagle FAN, Chupei City, Hsinchu, Taiwan 302 (TW)
(72) Inventor: Eagle FAN, Chupei City, Hsinchu, Taiwan 302 (TW)
(74) Representative: Müller-Boré & Partner Patentanwälte

(57) **Abstract**

An improved hand-free telephone receiver includes: an earphone signal cord, a microphone and a connector, in which a plug of the earphone signal cord is placed in a jack of a telephone set, the microphone is connected with the signal cord and has an elastic clip on its back side for attaching to an user's clothing; the microphone can be connected through a power cord with the connector which may be a pen or a torch and so on that may be carried by the user's clothing and has a battery box and a speaker in it, voice from the receiver is transmitted through the earphone signal cord and the power cord to the earphone or the speaker, the user may talk to the other side through the microphone so that it is not necessary to hold the telephone receiver by hand, and that can be used widely for a mobile or a domestic telephone set.

## Description

### Field of the Invention

The present invention involves an improved hand-free telephone receiver, especially a device which may be combined with an article such as a pen or a torch and used widely for a mobile or a domestic telephone set where hand-free making/taking a call is needed.

### Background of the Invention

A conventional hand-free holding device for mobile telephone set is generally used in a car where a driver is driving the car over making/taking a call, such a device has a more complex structure including a holder, a speaker and a signal cable etc. which causes messy inside of a car and inconvenient use. Alternately, another hand-free holding device for an indoor telephone set is usually used in a telephone exchange and contains a microphone for talking and an earphone for receiving. However, such a design is only suitable to a coin telephone exchange other than a mobile or a domestic telephone set or a telephone set used in office; therefore, the inventor develops an improved hand-free telephone receiver which can be used anywhere for any types of telephone sets by means of his long term accumulated experience on manufacture and application in that field and through continual testing and improvement.

### Summary of the Invention

The major object of the present invention is to provide an improved hand-free telephone receiver which can be used anywhere for any types of telephone sets, that is, the hand-free telephone receiver can be used for a mobile or a common indoor telephone set and carried by an user for use at any time without a space occupied.

An other object of the present invention is to disclose an improved hand-free telephone receiver combined with an article with a specific function, that is, the hand-free telephone receiver may be combined with a connector such as a pen or a torch so that in addition of the receiving function, another specific function may be provided.

Therefore, in order to describe in detail the objects, characteristics and functions of the present invention, an example of embodiment and relevant figures are given as follows:

### Brief Description of the Drawings

Fig. 1 is a schematic dimensional view of the present invention;
Fig. 2 is a schematic sectional view of the present invention;
Fig. 3 is a schematic view of a connector of the present invention;
Fig. 4A is a schematic view showing how an user uses an earphone in a mobile telephone set;
Fig. 4B is a schematic view showing how an user carries an hand-free telephone receiver by his neck;
Fig. 5A is a schematic view showing how an user uses at the same time a hand-free telephone receiver and a connector;
Fig. 5B is a schematic view showing how an user uses only a connector.

### Detailed Description of the Invention

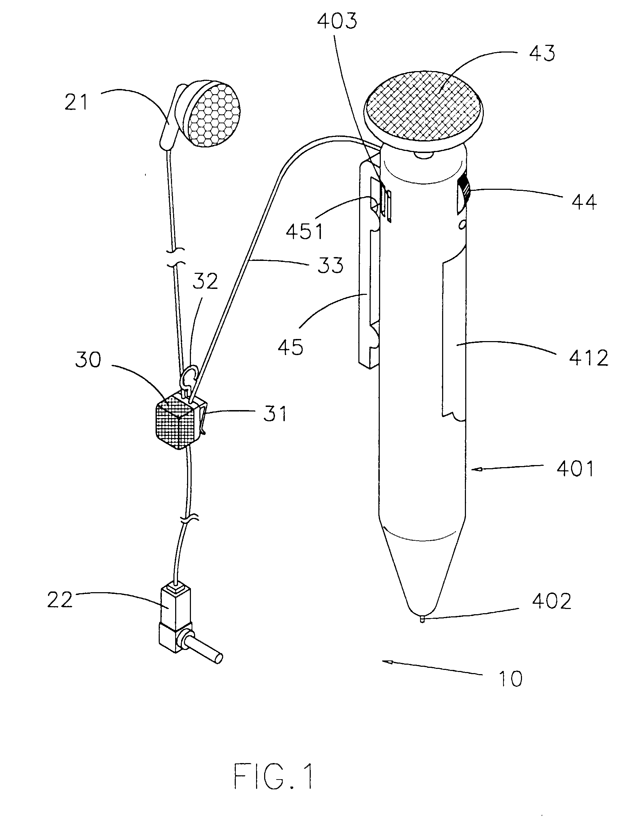

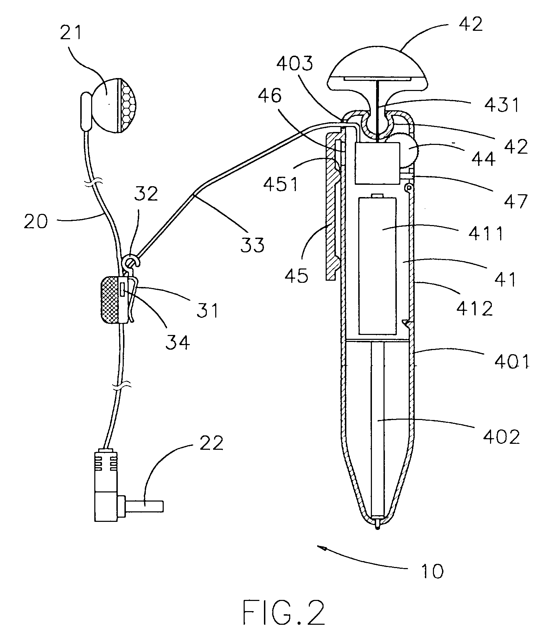

Fig. 1 is a schematic dimensional view of the present invention in which a hand-free telephone receiver 10 consists of an earphone signal cord 20, a microphone 30 and a connector 40, the earphone signal cord 20 has an earphone 21 provided at one end and a plug 22 at other end, the plug 22 serves to insert into a jack of telephone set (not shown in Fig. 1) , the microphone 30 is wired at a proper point of the earphone signal cord 20 and has an elastic clip 31 arranged on its back side, at a proper top point of the elastic clip 31 a hook 32 is provided, also the microphone 30 is equipped with a power cord 33 and is connected with the connector 40 through the power cord 33, the connector 40 may be a pen or a torch; and a pen 401 is used in an example of embodiment of the present invention. Referring to the schematic sectional view shown in Fig. 2, the pen 401 is provided with a refill 402 in its front sector for writing purpose, abattery box 41 for a battery 411 in its middle sector for power supply; a cover 412 is provided on the side wall of the pen 401 for placing/removing the battery 411, and the pen 401 is arranged with a spherical receptacle 42 at its end in which a speaker 43 is placed, the speaker 43 has a spherical end 431 fitted in the spherical receptacle 42 so that the speaker 43 is able to swing over the pen 401 to point the speaker 43 to a desired direction, furthermore, a volume control knob 44 is provided between the spherical receptacle 42 and the battery box 41, a clip 45 is equipped at a proper point of the external wall of the pen 401, an orifice 403 is arranged over the joint point of the clip 45 and the pen 401, through the orifice 403 the power cord 33 of the microphone 30 is placed.

Besides, a jack 46 is also provided in the external wall of the connector 40 for an additional microphone 30 which is connected with the connector 40 so that it is not necessary to wire the microphone 30 to the earphone signal cord 20; meanwhile, a jack 47 for external power supply is also provided in the connector 40.

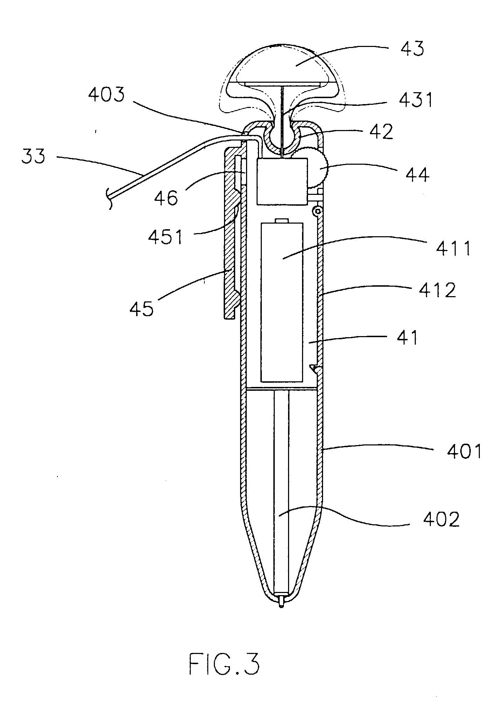

Fig. 3 is a schematic view of a connector of the present invention, referring to Fig. 2, the present invention can be used for a common indoor or a mobile telephone set where the plug 22 of the earphone signal cord 20 is plugged in a jack of the telephone set to make the voice to be gotten by the earphone 21, or by the speaker 43 through the microphone 30 and the power cord 33, beside the microphone 30 a selector switch 34 is arranged for selection of the earphone 21 or the speaker 43 to be used, and the volume can be controlled by a volume control knob 44, therefore, an user is able to talk by the hand-free telephone receiver over working in office, for example writing or operating a computer, resulting in an expanded space to use the telephone set; in order to get a perfect receiving, the speaker 43 can be swung to an optimum position over the connector 40.

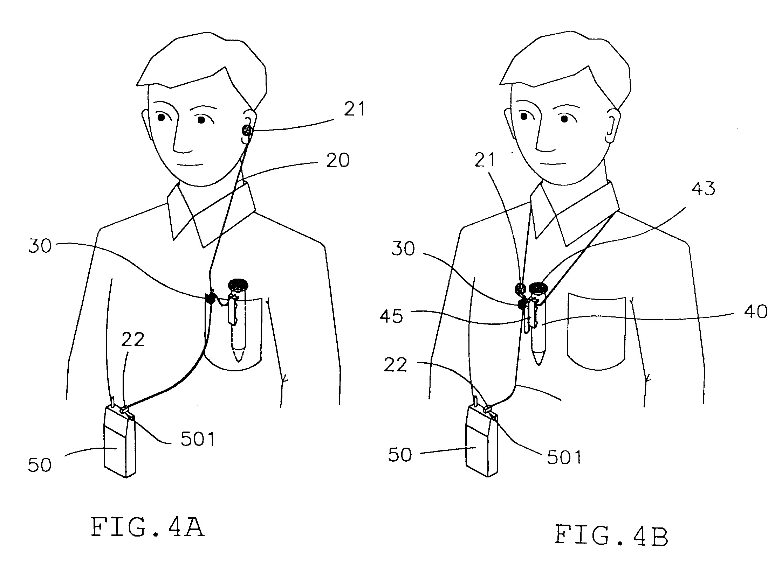

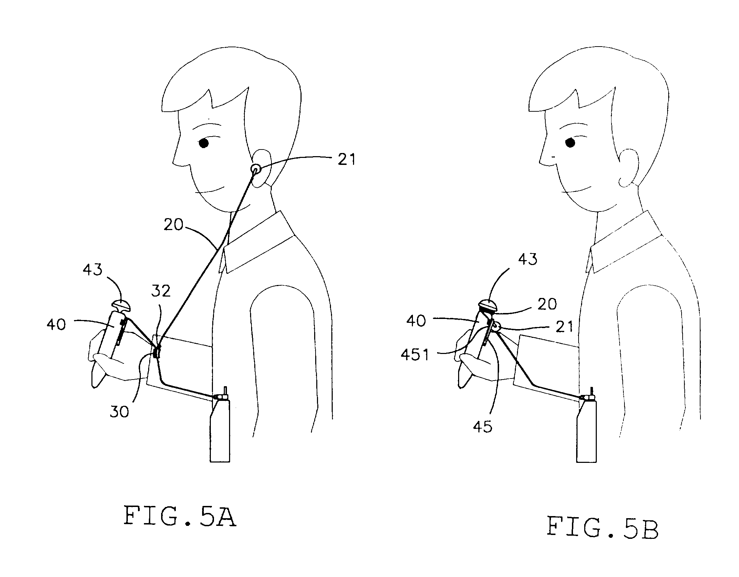

Fig. 4A, 4B, 5A and 5B show examples of embodiment of the present invention which are herein used for a mobile telephone set 50 which can be attached to an user's belt or bag where the plug 22 of the earphone signal cord 20 is placed in a jack 501 in the telephone set 50, the microphone 30 is fixed by the elastic clip of the microphone 30 onto the user's clothing nearby his face, a connector 40 (herein: a pen) is also attached by its clip onto the clothing; when a telephone call is taken, receiving can be carried out by the earphone 21 and talking by the microphone 30 connected with the telephone set 50, as shown in Fig. 4A, it is not necessary to provide a complex hand-free holding device in a car for a mobile telephone set; even when an user is walking on street, a hand-free holding function will also be given. When the telephone set is not in use, the earphone signal cord 20 can be placed around the user's neck with the signal cord 20 of the earphone 21 passing through the clip 45 of the connector 40, on the inner side of the clip 45 a protrusion 451 (as shown in Fig. 1 to Fig. 3) is provided to retain the earphone 21 located at the end of the earphone signal cord 20 on the outer side of the clip 45 and to make the earphone to be caught by the hook 32 of the microphone 30 so that the hand-free telephone receiver 10 may be carried by the user's neck, as shown in Fig. 4B.

Either for a common indoor telephone set or for a mobile telephone set and either the earphone 21 or the speaker 43 is used, the connector 40 can still have its original function, for example, if the connector 40 is a pen 401, it can be used for writing while the hand-free telephone receiver works (as shown in Fig. 5A), and while the earphone 21 is not in use, in order to avoid inconvenience to the user due to the long earphone signal cord 20, the earphone signal cord 20 may be wound in a gap between the end of the connector 40 and the speaker 43, the earphone 21 has its end passed through the clip 45 and caught by the hook 32 so that it is convenient to use and to walk freely (as shown in Fig. 5B).

As seen according to the above, the present invention 'Improved Hand-Free Telephone Receiver' has really the practical applicability and the creativeness, besides the present invention has never been published to the public so that it conforms to the regulations stipulated in the Patent Law.

The embodiment mentioned above is only a better example to embody the present invention and can not restrict the range of embodiment of the present invention to it, and any modifications or changes made based on claims of the present invention shall be considered to be within coverage of the present invention.

## Claims

1. An improved hand-free telephone receiver which consists of:
An earphone signal cord (20) which has an earphone (21) provided at one end and a plug (22) at the other end;
A microphone (30) which has an elastic clip (31) on its back side, and a hook (32) is arranged on a side of the clip (31);
A connector (40) in which a battery box (41) for a battery (411) to supply power to the microphone (30) and a speaker (43) for receiving is provided;
The plug (22) of the earphone signal cord (20) is placed in a jack in a telephone set (50) while the microphone (30) is attached on an user' s clothing by the elastic clip (31) so that voice from the telephone set (50) will be sent out by the earphone (21) or the speaker (43) to the user; the user talks to the other side through the microphone (30) resulting in the hand-free holding effect and possibility for application for a mobile or a domestic telephone set.

2. An improved hand-free telephone receiver according to Claim 1, in which the connector (40) may have a clip (45) on its outer side for attaching it to an user's clothing.

3. An improved hand-free telephone receiver according to Claim 2, in which a protrusion (451) is provided on the inner side of the clip (45).

4. An improved hand-free telephone receiver according to one or more of the preceding claims, in which a jack (47) for power input is arranged at a proper point of the connector (40).

5. An improved hand-free telephone receiver according to one or more of the preceding claims, in which an orifice (403) for passing a power cord (33) through is provided in the external wall of the connector (40).

6. An improved hand-free telephone receiver according to one or more of the preceding claims, in which a jack (46) for the microphone (30) is provided in the connector (40).

7. An improved hand-free telephone receiver according to one or more of the preceding claims, in which the connector (40) has a volume control knob (44) equipped in the connector (40).

8. An improved hand-free telephone receiver according to one or more of the preceding claims, in which the microphone (30) may be wired with the earphone signal cord (20).

9. An improved hand-free telephone receiver according to one or more of the preceding claims, in which the microphone (30) may be provided with a selector switch (34) for the earphone (21) or the speaker (43) selection.

10. An improved hand-free telephone receiver according to one or more of the preceding claims, in which the connector (40) may be a pen or a torch and so on.
